# EUROPÄISCHE PATENTANMELDUNG

(11) **EP 1 262 105 A1**
(43) Veröffentlichungstag der Anmeldung: **04.12.2002**
(21) Anmeldenummer: 02010853.6
(22) Anmeldetag: 15.05.2002
(51) Int. Cl.: A23J 7/00

(54) **Phospholipidische Zusammensetzung sowie deren Verwendung**

(30) Priorität: 31.05.2001 US 871589
(71) Anmelder: Nattermann Phospholipid GmbH, 50829 Köln (DE)
(72) Erfinder: Fussbroich, Peter, 50129 Bergheim (DE); Gareiss, Johannes, 50829 Köln (DE)
(74) Vertreter: Lau-Loskill, Philipp, Dipl.-Phys.

(57) **Zusammenfassung**

Es wird eine phospholipidische Zusammensetzung mit einer Konzentration an L-α-Glycerophosphatidylcholin von wenigstens 10 Gew.% beschrieben, wobei die Zusammensetzung ein Granulat ist und die Zusammensetzung neben dem L-α-Glycerophosphatidylcholin desweiteren wenigstens ein Granulierhilfsmittel enthält, das aus der Gruppe ausgewählt ist, die ein Mono-, Dioder ein Triphosphat eines Alkali- oder Erdalkali-Metalls oder eine Mischung davon umfaßt.

## Beschreibung

Die vorliegende Erfindung betrifft eine phospholipidische Zusammensetzung mit den Merkmalen des Oberbegriffs des Patentanspruchs 1 sowie die Verwendung einer derartigen phospholipidischen Zusammensetzung.

Phospholipidische Zusammensetzungen mit einer Konzentration von mehr als 10 Gew.% L-α-Glycerophosphatidylcholin, vorzugsweise mit einer Konzentration von etwa 30 Gew.% oder mehr Glycerophosphatidylcholin, sind bekannt. Hierbei werden diese phospholipidischen Zusammensetzungen insbesondere wegen ihres Glycerophosphatidylcholin-Gehaltes als wirksame und wertvolle Inhaltsstoffe in pharmazeutischen Produkten, kosmetischen Zubereitungen oder aber diätetischen Zubereitungen verwendet. Ein Hauptproblem bei einer derartigen Anwendung dieser bekannten phospholipidischen Zusammensetzungen liegt darin, daß Glycerophosphatidylcholin stark hygroskopisch ist, so daß derartige Zusammensetzungen insbesondere bei hohen Glycerophosphatidylcholin-Konzentrationen nur sehr schwer zu handhaben sind, so insbesondere entsprechend zu lagern oder genau zu dosieren.

Um das Problem der hygroskopischen Eigenschaften derartiger phospholipidischer Zusammensetzungen, die Glycerophosphatidylcholin enthalten, abzumildern, ist es bekannt, Glycerophosphatidylcholin oder die entsprechende, glycerophosphatidylcholin-haltige phospholipidische Zusammensetzung unter Verwendung eines Bindemittels zu granulieren, wobei dieses Bindemittel bewirken soll, daß die Glycerophosphatidylcholin-Partikel mit einer äußeren Beschichtung versehen werden, die den Wasserzutritt zum Glycerophosphatidylcholin verhindern, so daß die entsprechenden hygroskopischen Eigenschaften der phospholipidischen Zusammensetzung reduziert werden. Hierbei ist ein derartiges Granulierverfahren sehr energie- und zeitintensiv, zumal das Bindemittel, das die spätere Beschichtung um das Glycerophosphatidylcholin ausbildet, in Form einer verdünnten Lösung während des Granulierens zugeführt wird. Bedingt dadurch, daß eine Überfeuchtung während des Aufbringens der Beschichtung zu einem Zusammenbruch des Granulataufbaus führt, muß die Bindemittellösung langsam und vorsichtig zugeführt werden, während gleichzeitig das Lösemittel kontinuierlich entfernt wird.

Desweiteren ist es bekannt, Glycerophosphatidyl-Lösungen auf einen sorbierenden Träger aufzusprühen, wobei der Träger nur eine begrenzte Aufnahmefähigkeit für Glycerophosphatidylcholin besitzt, ohne daß der so mit Glycerophosphatidylcholin beladene Träger selbst hygroskopisch wird.

Ferner kann über eine Sprühtrocknung das hygroskopische Glycerophosphatidylcholin an einer Matrix gebunden werden, wobei die die Matrix bildenden Hilfsstoffe in der Regel wasserlöslich sind, so daß der hierfür erforderliche Energieaufwand besonders hoch ist und die auf diese Weise zubereitete Glycerophosphatidylcholin-Zusammensetzung nur eine begrenzte Konzentration an Glycerophosphatidylcholin besitzt.

Der vorliegenden Erfindung liegt die Aufgabe zugrunde, eine glycerophosphatidylcholin-haltige phospholipidische Zusammensetzung zur Verfügung zu stellen, deren hygroskopische Eigenschaften so weit reduziert sind, daß eine derartige phospholipidische Zusammensetzung insbesondere auch bei hohen Glycerophosphatidylcholin-Konzentrationen einwandfrei verarbeitet werden kann.

Diese Aufgabe wird erfindungsgemäß durch eine phospholipidische Zusammensetzung mit den kennzeichnenden Merkmalen des Patentanspruchs 1 gelöst.

Die erfindungsgemäße phospholipidische Zusammensetzung weist eine Mindestkonzentration an Glycerophosphatidylcholin von wenigstens 10 Gew.% auf, wobei die erfindungsgemäße Zusammensetzung ein Granulat ist und desweiteren neben dem Glycerophosphatidylcholin wenigstens ein Granulierhilfsmittel enthält, das aus der Gruppe ausgewählt ist, die ein Mono-, Dioder ein Triphosphat eines Alkali- oder Erdalkali-Metalls oder eine Mischung davon umfaßt. Mit anderen Worten unterscheidet sich somit die erfindungsgemäße phospholipidische Zusammensetzung, deren Konzentration an Glycerophosphatidylcholin wenigstens 10 Gew.% und vorzugsweise wenigstens 30 Gew.% und insbesondere bis zu 80 Gew.% Glycerophosphatidylcholin beträgt, vom eingangs genannten Stand der Technik dahingehend, daß die erfindungsgemäße Zusammensetzung als nicht hygroskopisches Granulat vorliegt, wobei das Granulat desweiteren mit mindestens einem Granulierhilfsmittel versetzt ist, das aus der Gruppe ausgewählt ist, die ein Mono-, Di- oder ein Triphosphat eines Alkali- oder Erdalkalimetalls oder eine Mischung hiervon umfaßt.

Überraschend konnte festgestellt werden, daß die zuvor genannten konkreten Granulierhilfsmittel (Mono-, Di- oder Triphosphat eines Alkali- oder Erdalkali-Metalls oder eine Mischung davon), die in der erfindungsgemäßen phospholipidischen Zusammensetzung neben dem wenigstens einen Glycerophosphatidylcholin vorgesehen ist, besonders wirksam und dauerhaft die hygroskopischen Eigenschaften der granulierten phospholipidischen Zusammensetzung unterdrücken, insbesondere auch dann, wenn die erfindungsgemäße Zusammensetzung eine hohe Konzentration an Glycerophosphatidylcholin enthält. Dies wiederum führt dazu, daß bei der erfindungsgemäßen phospholipidischen Zusammensetzung auf die an sich bekannte Beschichtung der Glycerophosphatidyl-Granulate verzichtet werden kann, da durch Zusatz des zuvor genannten Granulierhilfsmittels Zusammensetzungen resultieren, die nicht hygroskopisch oder nur noch sehr gering hygroskopisch sind. Dies wiederum bewirkt, daß die erfindungsgemäße Zusammensetzung sehr leicht dosiert werden kann, selbst dann, wenn die erfindungsgemäße Zusammensetzung über einen längeren Zeitraum ohne besondere Vorkehrungen, so beispielsweise ohne Verpacken unter Inertgas in feuchtigkeitsdichten Verpackungen, gelagert wird. Von daher kann bei der Anwendung der erfindungsgemäßen Zusammensetzung auch auf fließregulierende Substanzen, wie sie bei den bekannten, glycerophosphatidylcholin-haltigen phospholipidischen Zusammensetzungen stets erforderlich sind, verzichtet werden. Bedingt dadurch, daß die erfindungsgemäße Zusammensetzung im günstigsten Fall eine hohe Konzentration an Glycerophosphatidylcholin und nur einen geringen Anteil an Granulierhilfsmittel aufweist, läßt sich die erfindungsgemäße Zusammensetzung in eine Vielzahl von Folgeprodukten besonders gut verarbeiten, da die möglicherweise störenden Zusätze hierin nur in einer geringen Konzentration enthalten sind. Dieser Vorteil wird bei der erfindungsgemäßen Zusammensetzung insbesondere noch dadurch verstärkt, daß die als Granulierhilfsmittel in der erfindungsgemäßen Zusammensetzung vorhandenen Produkte (Mono-, Di- oder Triphosphate eines Alkalioder Erdalkali-Metalls oder eine Mischung davon) nach Art und Menge für Arzneimittel, kosmetische Zubereitungen und für Lebensmittelanwendungen, so insbesondere auch für Diätetika, weltweit und auch in den Vereinigten Staaten von Amerika zugelassen sind, was bei den eingangs genannten Stoffen, die in den bekannten phospholipidischen Zusammensetzungen zur Unterdrückung der hygroskopischen Eigenschaften des Glycerophosphatidylcholin vorhanden sind, häufig nicht der Fall ist. Von daher wird auch verständlich, daß die erfindungsgemäße granulierte phospholipidische Zusammensetzung ohne zusätzliche aufwendige Prozeßschritte zu lagerstabilen Endprodukten formuliert werden kann, so insbesondere Granulate, Hartkapseln oder Tabletten. Insbesondere ist noch als weiterer Vorteil herauszustellen, daß das Herstellungsverfahren für die erfindungsgemäße phospholipidische Zusammensetzung besonders einfach und somit auch kostengünstig und störunanfällig durchführbar ist, da hierbei im einfachsten Fall zunächst die Bestandteile der phospholipidischen Zusammensetzung in einem geeigneten Mischer trocken zu einer Pulvermischung vermischt werden, hiernach eine Granulierflüssigkeit, vorzugsweise ein niedriger einwertiger Alkohol, zugesetzt wird und das so erstellte feuchte Granulat lediglich noch zu Trocknen ist, wobei die eingesetzte Granulierflüssigkeit ggf. zurückgewonnen wird.

Bezüglich der Konzentration der in der erfindungsgemäßen Zusammensetzung enthaltenen Granulierhilfsmittels ist grundsätzlich festzuhalten, daß sich die Konzentration dieses Granulierhilfsmittels danach richtet, wie hoch die Konzentration an Glycerophosphatidylcholin in der jeweiligen Zubereitung ist und insbesondere auch welche hygroskopischen Eigenschaften die diesbezügliche phospholipidische Zusammensetzung aufweisen darf. Ist es erwünscht, daß die erfindungsgemäße Zusammensetzung eine sehr geringe oder keine hygroskopischen Eigenschaften mehr aufweist, so werden insbesondere bei hohen Konzentrationen an Glycerophosphatidylcholin auch hohe Konzentrationen an Granulierhilfsmittel vorgesehen, so daß dementsprechend solche Zusammensetzungen, bei denen die Konzentration an Glycerophosphatidylcholin zwischen 50 Gew.% und 98 Gew.% variiert, zwischen 2 Gew.% und 50 Gew.% Granulierhilfsmittel vorgesehen sind. Derartige Zusammensetzungen weisen dann keinerlei hygroskopische Eigenschaften mehr auf, so daß ein rieselfähiges Phospholipid-Granulat zur Verfügung steht, das ohne Verklumpen einwandfrei verarbeitet und auch ohne besondere Schutzvorkehrungen gelagert werden kann. Vorzugsweise weist die erfindungsgemäße Zusammensetzung das Granulierhilfsmittel in einer Mindestkonzentration von 2 Gew.% und insbesondere zwischen 2 Gew.% und 50 Gew.% auf, wobei überraschend festgestellt werden konnte, daß Granulierhilfsmittel-Konzentrationen zwischen 10 Gew.% und 30 Gew.% besonders geeignet sind. Derartige Granulierhilfsmittel-Konzentrationen, d.h. Konzentrationen zwischen insbesondere 10 Gew.% und 30 Gew.%, stellen sicher, daß bei der Weiterverarbeitung der erfindungsgemäßen granulierten phospholipidischen Zusammensetzung zu Folgeprodukten, so insbesondere in der Lebensmittelanwendung oder in der pharmazeutischen Anwendung, ein zu hohes Maß an Granulierhilfsmittel vorhanden sind, die möglicherweise mit weiteren Bestandteilen oder Wirkstoffen unerwünschte Nebenreaktionen ergeben.

Eine besonders geeignete Ausführungsform der erfindungsgemäßen phospholipidischen Zusammensetzung sieht vor, daß hierbei das Granulat eine Korngröße zwischen 0,063 mm und 5 mm, vorzugsweise zwischen 1,2 mm und 3 mm, besitzt, wobei bei Einhaltung einer derartigen Korngröße die erfindungsgemäße Zusammensetzung besonders einfach und reproduzierbar während ihrer Verarbeitung zu Folgeprodukten, zu dosieren ist.

Um bei der erfindungsgemäßen granulierten phospholipidischen Zusammensetzung deren Anwendung weiter zu vereinfachen, insbesondere die Dosierung derselben, sieht eine Weiterbildung der erfindungsgemäßen Zusammensetzung vor, daß die Zusammensetzung ferner neben Glycerophosphatidylcholin und den zuvor genannten Granulierhilfsmittel Cellulose und/oder Siliciumdioxid enthält. Vorzugsweise variiert dabei die Konzentration der Cellulose in der erfindungsgemäßen Zusammensetzung zwischen 0,5 Gew.% und 30 Gew.%, insbesondere zwischen 5 Gew.% und 20 Gew.%. Insbesondere wird bei der Herstellung der phospholipidischen Zusammensetzung bei den zuvor beschriebenen Ausführungsformen, bei denen die phospholipidische Zusammensetzung Cellulose enthält, eine solche Cellulose verwendet, deren mittlere Korngröße zwischen 60 µm und 150 µm, vorzugsweise zwischen 90 µm und 120 µm, variiert. Eine derartige pulvrige Cellulose mit der zuvor definierten Korngröße stellt insbesondere sicher, daß bei der zur Herstellung der erfindungsgemäßen Zusammensetzung erforderlichen Granulierung ein rieselfähiges Granulat resultiert, das dauerhaft hygroskopisch ist und frei von Fließmitteln zu verarbeiten ist.

Eine weitere, vorteilhafte Ausgestaltung der erfindungsgemäßen phospholipidischen Zusammensetzung sieht vor, daß hierbei die phospholipidische Zusammensetzung desweiteren Siliciumdioxid aufweist, wobei die Konzentration dieses Siliciumdioxids in der Zusammensetzung zwischen 0,5 Gew.% und 3 Gew.%, vorzugsweise zwischen 1 Gew.% und 2 Gew.%, variiert. Insbesondere bewirkt auch dieses Siliciumdioxid in der Zusammensetzung, daß relativ harte und somit staubfreie Granulate resultieren, wobei die Eigenschaften derartiger Granulate auch bei Lagerung unter extremer Luftfeuchtigkeit nicht verändert werden.

Insbesondere dann, wenn die erfindungsgemäße granulierte phospholipidische Zusammensetzung das zuvor beschriebene Siliciumdioxid in den vorstehend genannten Konzentrationen in einer Teilchengröße, die vorzugsweise zwischen 5 nm und 25 nm, insbesondere zwischen 10 nm und 20 nm, variiert, enthält, sind die Eigenschaften bezüglich der Härte und Staubfreiheit einer derartigen Zusammensetzung besonders dauerhaft, so daß eine derartige Zusammensetzung sehr leicht und einfach selbst bei hohen Glycerophosphatidylcholin-Konzentrationen erhalten bleiben.

Insbesondere wird in die erfindungsgemäße phospholipidische Zusammensetzung ein solches Siliciumdioxid eingearbeitet, das eine Oberfläche zwischen 100 m²/g und 300 m²/g, vorzugsweise zwischen 150 m²/g und 250 m²/g, besitzt.

Wie bereits vorstehend bei der erfindungsgemäßen phospholipidischen Zusammensetzung ausgeführt ist, weist die erfindungsgemäße Zusammensetzung ein Granulierhilfsmittel auf, wobei vorzugsweise als Granulierhilfsmittel hier ein Calciumsalz der Phosphorsäure und insbesondere Tricalciumphosphat vorgesehen wird.

Insbesondere dann, wenn die erfindungsgemäße granulierte phospholipidische Zusammensetzung Tricalciumphosphat als Granulierhilfsmittel aufweist, das weniger als 10 Gew.% Monound/oder weniger als 10 Gew.% Dicalciumphosphat, jeweils bezogen auf die Gesamtmenge an Tricalciumphosphat, enthält, besitzt eine derartige Zusammensetzung extrem geringe hygroskopische Eigenschaften, so daß sie unbegrenzt lagerfähig ist, ohne daß hierbei die Gefahr besteht, daß das Granulat in unerwünschter Weise durch Aufnahme von Feuchtigkeit zusammenklumpt.

Grundsätzlich ist es möglich, daß die erfindungsgemäße phospholipidische Zusammensetzung auch die herkömmlichen Bindemittel enthalten kann, wobei jedoch insbesondere die erfindungsgemäße phospholipidische Zusammensetzung frei von üblichen Bindemitteln ist, da durch die Anwesenheit des in der erfindungsgemäßen Zusammensetzung enthaltenen mindestens einen Granulierhilfsmittels dessen Eigenschaften, insbesondere die hygroskopischen Eigenschaften, so weit positiv beeinflußt werden, daß durch eine derartig formulierte phospholipidische Zusammensetzung die hygroskopischen Eigenschaften des Glycerophosphatidylcholin vollständig oder nahezu vollständig unterdrückt werden.

Wie bereits vorstehend beschrieben ist, weist die erfindungsgemäße Zusammensetzung vorzugsweise relativ hohe Konzentrationen an Glycerophosphatidylcholin auf, wobei insbesondere die Konzentration des Glycerophosphatidylcholin in der erfindungsgemäßen Zusammensetzung größer als 70 Gew.% und vorzugsweise zwischen 80 Gew.% und 95 Gew.% variiert. Mit anderen Worten wird somit eine erfindungsgemäße phospholipidische Zusammensetzung zur Verfügung gestellt, die Glycerophosphatidylcholin in hohen Konzentrationen aufweist, wobei überraschenderweise durch Verwendung von geringen Konzentrationen der zuvor genannten speziellen Granulierhilfsmittel wirksam und dauerhaft die hygroskopischen Eigenschaften des Glycerophosphatidylcholin unterdrückt werden, so daß rieselfähige und dementsprechend reproduzierbar zu dosierende Zusammensetzungen bereitgestellt werden, die insbesondere in pharmazeutische Zubereitungen, in der Lebensmittelanwendung, in kosmetischen Zubereitungen oder zur Herstellung von Derivaten von Glycerophosphatidylcholin verwendet werden können.

Eine besonders geeignete spezielle Ausführungsform der erfindungsgemäßen phospholipidischen Zusammensetzung sieht vor, daß hierbei die Zusammensetzung zwischen
10 und 80 Gew.% Glycerophosphatidylcholin,
0 bis 40 Gew.% Cellulose,
0,5 bis 50 Gew.% Calciummonophosphat, Calciumdiphosphat
und/oder Calciumtriphosphat und
0,5 bis 3 Gew.% Silciumdioxid aufweist.

Ist es jedoch erwünscht, daß die erfindungsgemäße phospholipidische Zusammensetzung als hartes, leicht zu verarbeitendes und glycerophosphatidylcholin-reiches Produkt, das vielfach anwendbar ist, zur Verfügung gestellt wird, so weist eine andere spezielle Ausführungsform der erfindungsgemäßen Zusammensetzung einen Aufbau auf, der zwischen
40 und 70 Gew.% Glycerophosphatidylcholin,
10 bis 30 Gew.% Cellulose,
10 bis 30 Gew.% Calciummonophosphat, Calciumdiphosphat
und/oder insbesondere Calciumtriphosphat und
1,5 bis 2,5 Gew.% Silciumdioxid umfaßt. Eine derartige Zusammensetzung ist auch ohne weitere Zusätze fließfähig und kann dementsprechend reproduzierbar dosiert, insbesondere abgewogen, werden, so daß sie zur Herstellung einer Vielzahl von Endprodukten im kosmetischen Bereich, pharmazeutischen Bereich oder im Lebensmittelbereich dienen kann.

Glycerophosphatidylcholin in der vorliegenden Beschreibung bezeichnet insbesondere das L-α-Glycerophosphatidylcholin, das auch unter anderem als (R)-1,2-Glycero-3-Phosphatidylcholin bezeichnet wird. Desweiteren deckt der hier verwendete Begriff Glycerophosphatidylcholin auch Derivate des Glycerophosphatidylcholins, insbesondere Ether und Ester des Glycerophosphatidylcholins, ab, insbesondere, sofern diese Derivate hygroskopisch sind. Insbesondere weist jedoch die erfindungsgemäße granulierte phospholipidische Zusammensetzung ein solches L-α-Glycerophosphatidylcholin auf, das aus pflanzlichem Ursprung stammt und das insbesondere aus Sojabohnen isoliert ist.

Wie bereits vorstehend wiederholt ausgeführt ist, wird die erfindungsgemäße phospholipidische Zusammensetzung insbesondere in Lebensmitteln, kosmetischen oder pharmazeutischen Produkten verwendet. Bedingt dadurch, daß die erfindungsgemäße phospholipidische Zusammensetzung einerseits als relativ stabiles, recht hartes und staubfreies Granulat vorliegt und andererseits keine oder nur noch geringe hygroskopische Eigenschaften aufweist, läßt sich die erfindungsgemäße phospholipidische Zusammensetzung besonders reproduzierbar und staubfrei dosieren und besitzt eine extrem große Lagerstabilität, so daß selbst bei einer Lagerung bei relativ hoher Luftfeuchtigkeit keine oder nur eine geringe Gewichtszunahme resultiert und auch kein Zusammenklumpen auftritt, was als weiterer, besonderer Vorteil der erfindungsgemäßen Zusammensetzung angesehen wird. Bedingt dadurch, daß die erfindungsgemäße Zusammensetzung als Granulierhilfsmittel die eingangs genannten Inhaltsstoffe aufweist, die weltweit sowohl nach ihrer Art als auch nach ihrer Menge im Nahrungsmittelbereich, im Arzneimittelbereich sowie im kosmetischen Bereich zugelassen sind, bestehen bei der Anwendung der erfindungsgemäßen Zusammensetzung zur Herstellung von pharmazeutischen oder kosmetischen Zubereitungen oder bei der Herstellung von diätetischen Produkten, von Nahrungsmitteln und/oder Nahrungsergänzungsmitteln keine Probleme, so daß dementsprechend die erfindungsgemäße Zusammensetzung vielfältig anwendbar ist.

Die erfindungsgemäße Zusammensetzung wird nachfolgend anhand von verschiedenen Ausführungsbeispielen näher erläutert.

### Herstellvorschrift für die Ausführungsbeispiele 1 bis 4

Die in den Ausführungsbeispielen angegebenen Bestandteile wurden trocken als pulvrige Bestandteile in einen Mischer Typ Diosna P25 (Firma Diosna-Germany) und dort während einer Vermischzeit von drei Minuten bei einer Drehzahl von Stufe 1 vermischt.

Nach Ablauf der Vermischzeit wurde eine homogene Pulvermischung erhalten.

Bei laufendem Mischer wurde als Granulierflüssigkeit der Mischung 25 Gew.% Ethanol zugegeben, wobei sich eine weitere Mischzeit von drei Minuten anschloß.

Nach Ablauf dieser weiteren Mischzeit wurde das so erstellte feuchte Granulat im Hordentrockenschrank so weit getrocknet, bis im Granulat kein Ethanol mehr nachweisbar war.

Hiernach wurde das so erstellte Granulat unter Verwendung eines Siebes mit einer Maschenweite von 16 mesh (US Bureau of Standards) ausgesiebt.

### Ausführungsbeispiel 1 bis 5

Die in der Tabelle 1 wiedergegebenen Inhaltsstoffe wurden zur Herstellung der Ausführungsbeispiele 1 bis 5 verwendet. Hierbei dient das Ausführungsbeispiel 5 lediglich zum Vergleich, da es kein Granulierhilfsmittel auf Basis von Tricaiciumphosphat enthielt.

**Tabelle 1**

| | AUSFÜHRUNGSBEISPIELE | | | | |
|---|---|---|---|---|---|
| | 1 | 2 | 3 | 4 | 5 |
| Inhaltsstoffe | in Gew.% | | | | |
| Glycerophosphatidylcholin | 50 | 60 | 70 | 90 | 90 |
| Cellulose | 25 | 25 | 15 | 2 | 5 |
| Tricalciumphosphat | 18 | 10 | 10 | 6 | - |
| Siliciumdioxid | 7 | 5 | 5 | 5 | 5 |

- Glycerophosphatidylcholin bedeutet in Tabelle 1 L-α-Glycerophosphatidylcholin, isoliert aus Sojabohnen, Reinheit mindestens 95 Gew.% Glycerophosphatidylcholin, Schmelzpunkt 230 - 245 °C;
- Cellulose bedeutet in Tabelle 1 mikrokristalline, gereinigte und teilweise depolymerisierte Cellulose mit einer mittleren Korngröße von 100 µm;
- Tricalciumphosphat bedeutet in Tabelle 1 ein solches Tricalciumphosphat, das maximal 10 Gew.% Monocalciumphosphat und maximal 10 Gew.% Dicalciumphosphat enthält;
- Siliciumdioxid bedeutet in Tabelle 1 ein hochdisperse Siliciumdioxid mit einer mittleren Teilchengröße von 15 nm und einer Oberfläche von 200 m²/g.

Von den nach der vorstehenden Herstellungsvorschrift hergestellten Granulate wurde die Gewichtszunahme, die als Maß der hygroskopischen Eigenschaften zu sehen ist, nach vorgegebenen Zeitabständen (1 Tag, 7 Tage, 3 Monate) gemessen, wobei hierzu die jeweiligen Granulatproben unter Normklima, d.h. bei einer 65 %igen relativen Feuchte und bei 20 °C, unverschlossen gelagert wurden. Die Ergebnisse der Gewichtszunahme in Gew.% nach einer entsprechenden Lagerung sind in Tabelle 2 wiedergegeben.

**Tabelle 2**

| | Gewichtszunahme in Gew.% nach einer Lagerung von | | |
|---|---|---|---|
| Ausführungsbeispiel | 1 Tag | 7 Tagen | 3 Monaten |
| 1 | 0,2 | 0,4 | 1 |
| 2 | 0,3 | 0,5 | 1,5 |
| 3 | 0,3 | 0,6 | 1,8 |
| 4 | 0,5 | 0,7 | 1,9 |
| 5 | 4 | 6 | 12 |

Zu dem Granulat gemäß Ausführungsbeispiel 5 ist festzuhalten, daß dieses Granulat bereits nach 7 Tagen deutlich klumpte und seine Rieselfähigkeit verloren hatte, so daß es für eine weitere Verwendung nicht geeignet war. Die anderen Granulate gemäß der Ausführungsbeispiele 1 bis 4 zeigten diese Veränderungen nicht, so daß diese Granulate selbst nach einer dreimonatigen Lagerzeit unverändert waren.

## Patentansprüche

1. Phospholipidische Zusammensetzung mit einer Konzentration an L-α-Glycerophosphatidylcholin von wenigstens 10 Gew.%, **dadurch gekennzeichnet, daß** die Zusammensetzung ein Granulat ist und daß die Zusammensetzung neben dem L-α-Glycerophosphatidylcholin desweiteren wenigstens ein Granulierhilfsmittel enthält, das aus der Gruppe ausgewählt ist, die ein Mono-, Di- oder ein Triphosphat eines Alkali- oder Erdalkali-Metalls oder eine Mischung davon umfaßt.

2. Phospholipidische Zusammensetzung nach Anspruch 1, **dadurch gekennzeichnet, daß** die Zusammensetzung das Granulierhilfsmittel in einer Konzentration zwischen 2 Gew.% und 50 Gew.% aufweist.

3. Phospholipidische Zusammensetzung nach einem der vorangehenden Ansprüche, **dadurch gekennzeichnet, daß** die Zusammensetzung das Granulierhilfsmittel in einer Konzentration zwischen 10 Gew.% und 30 Gew.% enthält.

4. Phospholipidische Zusammensetzung nach einem der vorangehenden Ansprüche, **dadurch gekennzeichnet, daß** das Granulat eine Korngröße zwischen 0,063 mm und 5 mm besitzt.

5. Phospholipidische Zusammensetzung nach einem der vorangehenden Ansprüche, **dadurch gekennzeichnet, daß** in der Zusammensetzung desweiteren Cellulose und/oder Siliciumdioxid enthalten ist.

6. Phospholipidische Zusammensetzung nach Anspruch 5, **dadurch gekennzeichnet, daß** die Konzentration der Cellulose in der Zusammensetzung zwischen 0,5 Gew.% und 30 Gew.% variiert.

7. Phospholipidische Zusammensetzung nach Anspruch 6, **dadurch gekennzeichnet, daß** die Konzentration der Cellulose in der Zusammensetzung zwischen 5 Gew.% und 20 Gew.% beträgt.

8. Phospholipidische Zusammensetzung nach einem der Ansprüche 5 bis 7, **dadurch gekennzeichnet, daß** die Cellulose eine mittlere Korngröße zwischen 60 µm und 150 µm, vorzugsweise zwischen 90 µm und 120 µm, besitzt.

9. Phospholipidische Zusammensetzung nach einem der Ansprüche 5 bis 8, **dadurch gekennzeichnet, daß** die Konzentration des Siliciumdioxids in der Zusammensetzung zwischen 0,5 Gew.% und 3 Gew.%, vorzugsweise zwischen 1 Gew.% und 2 Gew.%, variiert.

10. Phospholipidische Zusammensetzung nach einem der Ansprüche 5 bis 9, **dadurch gekennzeichnet, daß** das Siliciumdioxid eine Teilchengröße zwischen 5 nm und 25 nm, vorzugsweise zwischen 10 nm und 20 nm, aufweist.

11. Phospholipidische Zusammensetzung nach einem der Ansprüche 5 bis 10, **dadurch gekennzeichnet, daß** das Siliciumdioxid eine Oberfläche zwischen 100 m²/g und 300 m²/g, vorzugsweise zwischen 150 m²/g und 250 m²/g, besitzt.

12. Phospholipidische Zusammensetzung nach einem der vorangehenden Ansprüche, **dadurch gekennzeichnet, daß** die Zusammensetzung als Granulierhilfsmittel mindestens ein Calciumsalz der Phosphorsäure aufweist.

13. Phospholipidische Zusammensetzung nach Anspruch 12, **dadurch gekennzeichnet, daß** das Calciumsalz der Phosphorsäure Tricalciumphosphat ist.

14. Phospholipidische Zusammensetzung nach einem der vorangehenden Ansprüche, **dadurch gekennzeichnet, daß** das Tricalciumphosphat weniger als 10 Gew.% Mono- und/oder weniger als 10 Gew.% Dicalciumphosphat, jeweils bezogen auf die Gesamtmenge an Tricalciumphosphat, enthält.

15. Phospholipidische Zusammensetzung nach einem der vorangehenden Ansprüche, **dadurch gekennzeichnet, daß** die Zusammensetzung frei von üblichen Bindemitteln ist.

16. Phospholipidische Zusammensetzung nach einem der vorangehenden Ansprüche, **dadurch gekennzeichnet, daß** die Konzentration des L-α-Glycerophosphatidylcholin in der Zusammensetzung größer als 70 Gew.% ist.

17. Phospholipidische Zusammensetzung nach Anspruch 16, **dadurch gekennzeichnet, daß** die Konzentration an L-α-Glycerophosphatidylcholin in der Zusammensetzung zwischen 80 Gew.% und 95 Gew.%, variiert.

18. Phospholipidische Zusammensetzung nach einem der Ansprüche 1 bis 16, **dadurch gekennzeichnet, daß** die Zusammensetzung zwischen
10 und 80 Gew.% L-α-Glycerophosphatidylcholin
0 bis 40 Gew.% Cellulose
0,5 bis 50 Gew.% Calciummonophosphat, Calciumdiphosphat und/oder Calciumtriphosphat und
0,5 bis 3 Gew.% Silciumdioxid
aufweist.

19. Phospholipidische Zusammensetzung nach Anspruch 18, **dadurch gekennzeichnet, daß** die Zusammensetzung
40 und 70 Gew.% L-α-Glycerophosphatidylcholin
10 bis 30 Gew.% Cellulose
10 bis 30 Gew.% Calciummonophosphat, Calciumdiphosphat und/oder Calciumtriphosphat und
1,5 bis 2,5 Gew.% Silciumdioxid
aufweist.

20. Phospholipidische Zusammensetzung nach einem der vorangehenden Ansprüche, **dadurch gekennzeichnet, daß** das L-α-Glycerophosphatidylcholin aus pflanzlichem Ursprung stammt und insbesondere aus Sojabohnen isoliert ist.

21. Verwendung der phospholipidischen Zusammensetzung nach einem der Ansprüche 1 bis 20 in Lebensmitteln, kosmetischen oder pharmazeutischen Produkten.
